# EUROPEAN PATENT APPLICATION

(11) **EP 2 495 620 A1**
(43) Date of publication of application: **05.09.2012**
(21) Application number: 11156335.9
(22) Date of filing: 04.03.2011
(51) Int. Cl.: G03G 21/18, G03G 15/08, G06Q 10/00, B41J 2/175

(54) **Device and method for remote identification of a compatible consumable**

(71) Applicant: Rethink S.A., 57001 Thessaloniki (GR)
(72) Inventor: Lioumbis, Alexandros, 15234, Halandri (GR)

(57) **Abstract**

A device for identifying a compatible consumable, such as a printer cartridge, for use in a printer is disclosed. According to an exemplary embodiment, the device remotely interrogates identifiers, such as RFID tags, attached to used and unused printer cartridges and compares identification information. If there is a match then an indication of compatibility is displayed. Otherwise, a database is queried to identify printer models that can accommodate both cartridges. If such printers are identified then an indication of compatible printers is displayed. The unused printer cartridge remains in its original packaging during the queries. With the proposed technique errors related to inadvertent use of printer cartridges are minimized.

## Description

### Technical Field

The present disclosure relates to techniques for remotely identifying a compatible consumable. More specifically, it relates to techniques for remotely identifying that an unused replaceable consumable, such as an inkjet or toner cartridge, to be used in a device, such as a printer, is compatible with the device prior to mounting the consumable in the device and even prior to opening the packaging that the unused consumable is located.

### Background Art

Modern printing devices, such as printing computer peripherals, employ consumables that are replaceable. Two of the main printing technologies that are routinely found in modern printers are laser and inkjet printing technologies. Both printing technologies require consumables that are replaced when finished. These consumables are mostly in the form of toner and inkjet cartridges, respectively.

There are cases where a printer uses more than one type of consumable. For example colour printers (either laser or inkjet) require at least one cartridge for black and one for colour printing. Furthermore, there are printers, typically monochrome, that are manufactured to be able to receive cartridges of different size having corresponding containers with different quantity of toner or ink. It is apparent that each such distinct cartridge type assumes a distinct stock-keeping unit (SKU) code for inventory or billing purposes.

There are also cases where cartridges with the same SKU may be used in more than one printer model. However, the fact that two printers share one cartridge SKU may not necessarily mean that they share all cartridge SKUs.

Furthermore, many cartridges are similar in shape and format and are only externally recognisable by their SKU or model number. Even so, many consumables have minor differences even in the model number and they require some sort of familiarity from the user in order for the appropriate consumable to be identified.

Today, most organisations typically have a number of different types of printer models distributed in various offices. Each such different printer model requires a set of cartridge SKUs that may be unique for the particular printer model. Thus, each organization is required to store a large number of stock items for their printing needs. Many of those items are similar or appear similar to the untrained eye.

As a result, untrained users often may easily be frustrated regarding which cartridge to use. Even worse, they might try unintentionally to use inappropriate cartridges in a printer. The consequences of such a mistake may range from a simple voidance of the cartridge warranty to damage to the printer. To avoid damage, most printers employ electronic means for identifying if a mounted cartridge is compatible for use in the printer. Such means may be contact type or near field wireless type in the form of integrated circuits (or "chips"). However, all known means require that the cartridge is installed or mounted in the printer before any form of identification is initiated.

Such identification systems are also traditionally used to avoid retrofitting of the cartridges. As many users consider the cost of original (OEM) consumables to be excessively high they prefer to use remanufactured or refilled cartridges. OEM manufacturers sometimes employ such identification means to prevent unauthorized cartridges to be used with a printer.

Remanufacturing firms, in such cases, use reengineered chips (contact or near field wireless) that circumvent the identification issues and allow the use of a remanufactured cartridge with a particular printer. In many cases generic chips are provided that may be used to replace OEM chips in a number of cartridge models. In such cases a chip may not be uniquely associated with a cartridge and is used only to circumvent the identification purposes of the printer.

Additionally, it should also be mentioned that many remanufacturers use generic packaging to package their remanufactured cartridges. In such cases, labels or other markings are used to either show the compatibility of the enclosed cartridge with an OEM cartridge or to show the compatibility of the enclosed cartridge with a set of printers. Therefore, users need to either know what the OEM cartridge model of their printer or what the model of the printer is to identify a compatible SKU in a stock area.

However, in case of uncertainty a mistake is easy to occur. As already mentioned, the consequences may range from a simple voidance-of-warrantee message to damage to the printer. In any case, though, the packaging of the unused cartridge is already opened and the cartridge may be rendered unusable or considered used by a future legitimate user of the cartridge in the same office.

There is a need for a method and a system of remotely identifying that an unused consumable, such as an inkjet or toner cartridge, is compatible with a specific device, such as a printer, prior to mounting the consumable to the device and even prior to opening the packaging that the unused consumable resides.

### Brief description of drawings

FIG. 1 shows a device for identifying a compatible consumable according to an exemplary embodiment.

FIG. 2 is a block diagram of a system employing the device of FIG. 1.

FIG. 3 is a flow chart of a method of identifying a compatible replaceable consumable.

### Description of embodiments

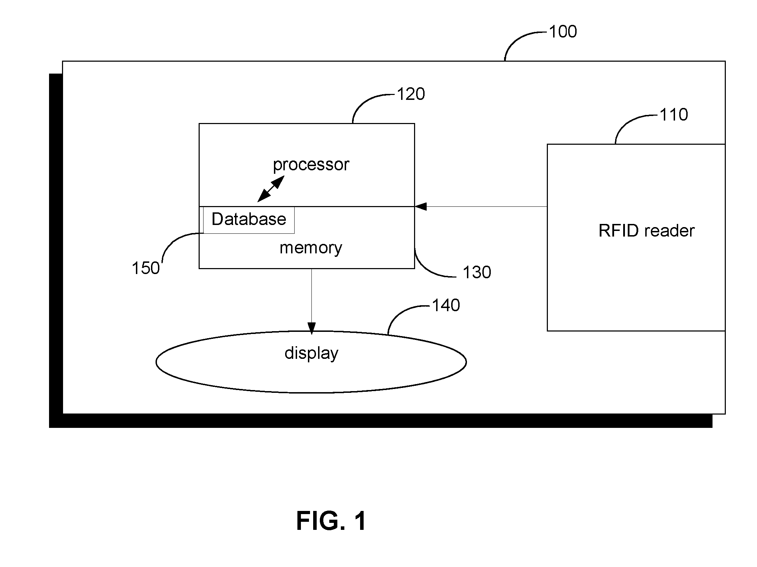

FIG. 1 shows a device for identifying a compatible consumable according to an exemplary embodiment. Device 100 includes Radio Frequency Identification (RFID) reader 110, processor 120, memory 130 and display 140. RFID reader 110 remotely interrogates a first RFID tag that is attached to a first consumable, such as a used printer cartridge inside a printer, to receive first identification information and stores this information in memory 130. Then RFID reader 110 remotely interrogates a second RFID tag that is attached on a second consumable, such as an unused printer cartridge that is still enclosed in its packaging, to receive second identification information and stores this information also in memory 130. Then processor 120 compares the first and second identification information. If the first and second identification information matches, then processor 120 instructs display 140 to present a message confirming compatibility. If the first and second identification information does not match, then processor 120 queries database 150. Database 150 may also be resident in memory 130. Database 150 includes information related to compatibility of devices, such as printers, with consumables, such as printer cartridges. This information may be in the form of a matrix associating a printer model with a set of identification messages, such as the identification messages read from first and second RFID tags during interrogation from the RFID reader. During the query, processor 120 requests information from the database. This information may be a identifying a list of printers that can accommodate printer cartridges associated with both first and second identification messages. This would mean that the identified printers can use more than one SKU of consumables. The result is that without having in possession an identical consumable for use in the specific printer, a user has a compatible consumable suitable for the particular printer. Therefore, if there is a match, that is, if there is at least one printer model that associates with both identification messages, then the processor instructs the display to provide the printer model(s) that fulfil the query. The user then needs only confirm that the printer at stake is one from the list of printers provided by the device.

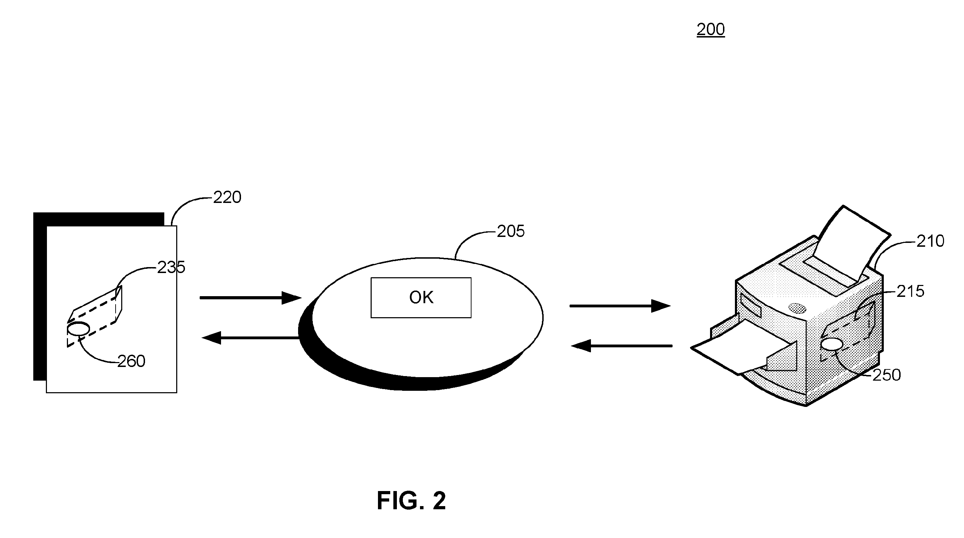

FIG. 2 is a block diagram of a system employing the device of FIG. 1. System 200 includes device 205, printer 210 and package 220. Printer 210 includes first consumable 215, such as a used cartridge. First consumable 215 includes attached RFID tag 250. Package 220 includes second consumable 235, such as an unused cartridge. Second consumable 235 includes attached RFID tag 260. Device 205 may communicate sequentially or simultaneously with consumables 215 and 235. RFID tags 250 and 260 attached on consumables 215 and 235, respectively, are shown as passive RFID tags. However, active RFID tags may also be used without departing from the scope of the invention.

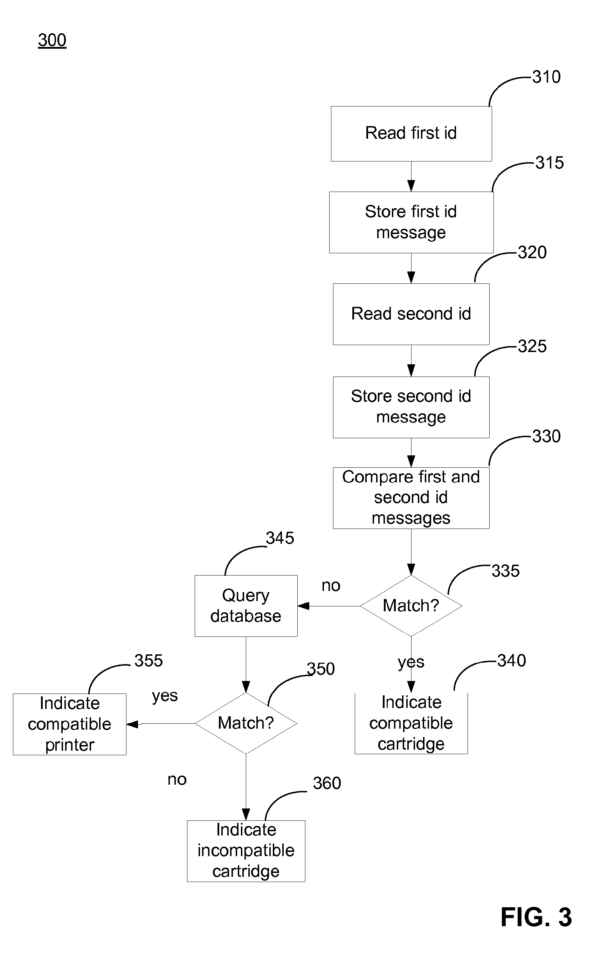

FIG. 3 is a flow chart of a method of identifying a compatible replaceable consumable. In first step 310, a first identification message, associated with a first consumable, such as a used cartridge, is read. Then, in step 315, the first identification message is stored. In step 320, a second identification message, associated with a second consumable, such as an unused cartridge, is read. In step 325, the second identification message is stored. Then in step 330, the first and second identification messages are compared. In decision box 335, if there is a match between the two identification messages the process continues to step 340. if there is no match the process continues with step 345. If there is a match, then, in step 340, an indication of compatibility is displayed and no further action is taken. If there is no match then, in step 345, a database is queried. The purpose of the query is to identify printer models that can accommodate both types of cartridges associated with both identification messages. This would mean that both cartridge SKUs are compatible with the particular printer(s). If a printer is found that is compatible with both cartridges, both the used and the unused, then, in step 355 an indication of a compatible printer is displayed. This indication may be in the form of a list displaying the respective printer model numbers. If the result of the query is null then, in step 360, an indication of an incompatible cartridge is displayed.

The preferred embodiment employs RFID technology to perform various functions of the present disclosure. However, one skilled in the art may appreciate that other wireless technologies, such as barcode scanning, may be used to accomplish the aforementioned goals. In the case of barcode scanning, the package where the unused consumable is enclosed requires to have a window to allow line of sight of a barcode label to a barcode scanner. Consequently, a user needs to remove the used cartridge from the printer to scan a barcode label attached thereto, and then scan the barcode label attached on the unused cartridge, visible through the transparent window on the packaging.

Those of skill would further appreciate that the various illustrative logical blocks, modules, circuits, and algorithm steps described in connection with the embodiments disclosed herein may be implemented as electronic hardware, computer software, or combinations of both. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the exemplary embodiments of the invention.

The various illustrative logical blocks, modules, and circuits described in connection with the embodiments disclosed herein may be implemented or performed with a general purpose processor, a Digital Signal Processor (DSP), an Application Specific Integrated Circuit (ASIC), a Field Programmable Gate Array (FPGA) or other programmable logic device, discrete gate or transistor logic, discrete hardware components, or any combination thereof designed to perform the functions described herein. A general purpose processor may be a microprocessor, but in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration.

The steps of a method or algorithm described in connection with the embodiments disclosed herein may be embodied directly in hardware, in a software module executed by a processor, or in a combination of the two. A software module may reside in Random Access Memory (RAM), flash memory, Read Only Memory (ROM), Electrically Programmable ROM (EPROM), Electrically Erasable Programmable ROM (EEPROM), registers, hard disk, a removable disk, a CD-ROM, or any other form of storage medium known in the art. An exemplary storage medium is coupled to the processor such that the processor can read information from, and write information to, the storage medium. In the alternative, the storage medium may be integral to the processor. The processor and the storage medium may reside in an ASIC. The ASIC may reside in a user terminal. In the alternative, the processor and the storage medium may reside as discrete components in a user terminal.

In one or more exemplary embodiments, the functions described may be implemented in hardware, software, firmware, or any combination thereof. If implemented in software, the functions may be stored on or transmitted over as one or more instructions or code on a computer-readable medium. Computer-readable media includes both computer storage media and communication media including any medium that facilitates transfer of a computer program from one place to another. A storage media may be any available media that can be accessed by a computer. By way of example, and not limitation, such computer-readable media can comprise RAM, ROM, EEPROM, CD-ROM or other optical disk storage, magnetic disk storage or other magnetic storage devices, or any other medium that can be used to carry or store desired program code in the form of instructions or data structures and that can be accessed by a computer.

The previous description of the disclosed exemplary embodiments is provided to enable any person skilled in the art to make or use the present invention. Various modifications to these exemplary embodiments will be readily apparent to those skilled in the art, and the generic principles defined herein may be applied to other embodiments without departing from the scope of the invention as presented with the claims.

## Claims

1. A device for identifying a compatible consumable to be used in a printer, comprising: a) means for remotely interrogating a first and a second identifier associated with a first consumable and a with second consumable, respectively, to receive a first and a second identification messages, respectively, and b) means for processing the first and the second identification messages to indicate compatibility of the first with the second consumable.

2. The device of claim 1, where the first and second consumables are printer cartridges.

3. The device of claim 2, where the first identifier is attached to the first printer cartridge, the first printer cartridge being a used printer cartridge mounted in the printer.

4. The device of claim 3, where the second identifier is attached to the second printer cartridge, the second printer cartridge being an unused printer cartridge enclosed in a sealed package.

5. The device of claim 4, further comprising means for indicating compatibility of the unused printer cartridge with the printer.

6. The device of claim 5, where the means for remotely interrogating comprise an RFID reader.

7. The device of claim 6, where the first and second identifiers are RFID tags.

8. The device of claim 4, where the means for processing include a receiver to receive the identification messages, a memory to store the identification messages and a processor to compare the first with the second identification messages.

9. The device of claim 8, further comprising a database stored in the memory having compatibility information associating the unused printer cartridge with the printer.

10. A method of identifying a compatible consumable to be used in a printer, the method comprising the steps of: a) remotely interrogating a first identifier associated with a first consumable to receive a first identification message, b) remotely interrogating a second identifier associated with a second consumable to receive a second identification message, c) comparing the first and second identification messages to indicate compatibility of the first with the second consumable.

11. The method of claim 10, further comprising indicating compatibility when a portion of the first identification message matches with a portion of the second identification message, where the portion of the first identification message and the portion of the second identification message indicate the same Stock-Keeping-Unit (SKU).

12. The method of claim 11, further comprising querying a database when the respective portions of the first and second identification messages do not match to identify a printer associated with the portion of the first as well as with the portion of the second identification messages.

13. The method of claim 12, further comprising indicating compatibility when a printer associated with the portion of the first as well as with the portion of the second identification messages is identified.

14. A consumable comprising a printer cartridge and an identifier, the identifier having an antenna coupled to a memory, wherein the memory includes information associated with the printer cartridge and where the antenna transmits the information when interrogated by a remote device.

15. The consumable of claim 14, where the remote device includes an RFID reader and the identifier is an RFID tag.
